Europäisches Patentamt

European Patent Office

Office européen des brevets

(19)

(11) Publication number: 0 310 445
A2

(12) **EUROPEAN PATENT APPLICATION**

(21) Application number: **88309150.6**

(22) Date of filing: **30.09.88**

(51) Int. Cl.⁴: **G 06 F 9/42**
**G 06 F 9/40**

(30) Priority: **02.10.87 US 104340**

(43) Date of publication of application:
**05.04.89 Bulletin 89/14**

(84) Designated Contracting States: **DE FR GB IT**

(71) Applicant: **COMPUTER CONSOLES INCORPORATED (a Delaware corporation)**
**9801 Muirlands Boulevard**
**Irvine California 92718-2521 (US)**

(72) Inventor: **Sims, Roger Scott**
**22945 Springwater Street**
**El Toro California 92630 (US)**

**Benkual, Jack**
**25906 Greenbank**
**El Toro California 92630 (US)**

(74) Representative: **Meddle, Alan Leonard et al**
**FORRESTER & BOEHMERT Widenmayerstrasse 4/I**
**D-8000 München 22 (DE)**

(54) High-speed overlapping window register file.

(57) A combination of elements provide support for communication of arguments between routines in an instruction processing apparatus. This combination includes a register file comprising a set of addressable registers. A first sub-set of the registers and a second sub-set of the registers define a pluarlity of register pairs. Each register pair includes a respective one of the registers in the first sub-set and a respective one of the registers in the second sub-set. Sub-set allocating means are provided having a first state for allocating the first sub-set as a group for incoming arguments and the second sub-set as a group for outgoing arguments, and a second state for allocating the second sub-set as a group for incoming arguments and the first sub-set as a group for outgoing arguments. Register-access control means enables each of successively invoked routines to access all the registers that define the register pairs and includes register-selecting means for supporting a predetermined type of instruction, which predetermined type of instruction contains a state-independent reference for use in forming an address to select a register. The register-selecting means includes address-altering means controlled by the sub-set allocating means for swapping the addresses of the two registers of each register pair to enable communication of arguments between calling and called routines without inter-register transfers of arguments.

FIG. 1

**Description**

## HIGH-SPEED OVERLAPPING WINDOW REGISTER FILE

Background of the Invention

In general, this invention relates to instruction processing apparatus; more particularly, it relates to a mechanism and method for supporting communication of arguments between routines.

Modern programming languages generally provide various programming constructs to support structured programming. As is well known, structured programming has numerous advantages; for example, it facilitates organizing and maintaining programs. One of the significant programming constructs is a routine, such as a procedure or function, that performs processing operations based on data that can be referred to interchangeably as arguments or parameters. A routine that is defined or declared once in a program can be invoked many times when the program runs. Generally, less code is involved (and less memory space is consumed) as a result of use of routines in comparison with in-line code which often involves repeating a particular sequence of instructions as a group in numerous sections of a program.

To support the invoking of a subroutine, the instruction repertory of an instruction processing apparatus includes instructions that are commonly referred to as call and return instructions. A call instruction is used as part of a sequence of instructions referred to as a call sequence, and a return instruction is used as part of a sequence of instructions referred to as a return sequence. Such sequences can be nested. That is, a call sequence can be executed within a routine referred to as a calling routine to invoke execution of a routine referred to as a called routine.

During execution of the instructions of a call sequence, the instruction processing apparatus must perform numerous detailed operations that can be categorized into two broad planning steps, followed by a relatively simple jump.

One such broad step relates to planning for the called routine to take over control. Among other things, this planning entails storing arguments in selected storage locations. Such arguments are referred to as outgoing arguments with respect to the calling routine and as incoming arguments with respect to the called routine. In carrying out this step, it is necessary to select storage locations in such a way that the called routine will be able to find the arguments being passed to it. In addition to needing access to the storage locations for the incoming arguments, the called routine in general needs access to other storage locations for data such as local variables and temporaries and arguments that may need to be passed incident to a nested calling sequence. Accordingly, this planning must entail allocating storage locations for the called routine to use for such data.

A second such broad step relates to planning for the calling routine to resume control following return from the called routine. Upon such return, the instruction processor will have to reconstruct a variety of conditions that are collectively referred to as the environment of the calling routine, and will have to update the program counter to point to the appropriate location where the calling routine can find the instruction it will need next to resume controlling the instruction processor. In other words, the instruction processor, to perform this step, must save the environment and return address of the calling routine.

After all the numerous operations involved in the foregoing planning have been carried out, the instruction processor can appropriately adjust the program counter to jump to the starting address of the called routine.

During execution of the instructions of a return sequence, the instruction processing apparatus must perform a corresponding sequence of detailed operations. As to a routine that returns a value, e.g., a function, the return value must be stored in a known loction. Storage locations that had been allocated for local variables and the like need to be de-allocated. The environment of the calling routine needs to be restored. After performing all such detailed operations, the instruction processor can execute the jump to return to the calling routine.

For many years, it has been recognized that a need exists for a computer architecture that embodies a high-speed mechanism for supporting communication of arguments between routines. In this regard, reference is made to an article entitled "A VLSI RISC," by Paterson et al., and published in the September 1982 issue of Computer, vol. 15, no. 9, pp. 8-22, which hereinafter is referred to as the "Berkeley RISC" article.

The Berkeley RISC article includes a report on an investigation into the use of high-level languages in a class of computers categorized as CISCs (Complex Instruction Set Computers) which led the authors to suggest that the procedure call is the most time-consuming operation in high-level language programs.

The Berkeley RISC article further includes an explana tion of various bases for categorizing a computer as being in the class of computers referred to as RISCs (Reduced Instruction Set Computers). Depending upon the extent to which a particular candidate architecture incorporates the various features that involve RISC principles, there can be even more reason for concern as to the possibility of an unduly large percentage of time being consumed in handling calls and returns.

The Berkeley RISC article discloses an approach to increasing the speed with which an instruction processing apparatus can handle calls and returns. The disclosed approach involves multiple banks of registers. In this regard, the disclosed approach is in accord with earlier proposals which advocated incorporation of multiple banks of registers on a single integrated circuit chip. More particularly, the Berkeley RISC article discloses the incorporation of 138 separate registers having physical addresses from 0 to 137. Out of these 138 registers constituting the large register file, only 32 at a time define a group that is a "window" for use by a routine. According to the explanation of operation, the window for a calling routine will overlap the window for the called routine. This overlapping effect is brought about to facilitate communication of arguments between routines. In particular, arguments stored in registers that appear to the calling routine to be in certain logical addresses can be communicated to the called routine without moving information between registers and appear to the called routine to be in certain other logical addresses.

This approach of providing a multiple-bank register file with overlapping windows has certain advantages and certain disadvantages. The main advantage of a register file, whether multi-bank or otherwise, relates to speed of access to a register compared to speed of access to a memory location. Execution of any instruction that entails accessing a register within the instruction processing apparatus can generally be carried out more rapidly than a instruction that entails accessing a memory loction in an external memory. Expressed in normalized terms involving relative number of clock cycles, it is typical for a memory access to require about 10 to 12 times as many clock cycles as a register access. The speed advantage of register access over memory access is highest for an implementation in which registers are incorporated in a single integrated chip that also incorporates other mechanisms to define a complete instruction processing apparatus. In any case, this ratio is high and a substantial penalty is incurred, in some circumstances, incident to a memory access. Such circumstances are those in which, incident to one of a sequence of instructions, such a memory access must be completed before the instruction can be completed or before the next instruction can start executing. A statistically high percentage of executed instructions retrieve incoming arguments, save and retrieve local variables and temporaries, and save outgoing arguments. Speeding up the execution of such frequently executed instructions by accessing registers rather than memory locations provides a significant advantage.

As to disadvantages of the approach disclosed in the Berkeley RISC article, numerous problems arise as a result of the large number of registers that are involved in providing multiple banks with only partial overlapping of windows of successively invoked routines. As is well known, the depth of an address decoding structure increases as a function of the number of separate physical addresses. An address decoding structure for the 138 separate registers recommended in the Berkeley RISC article would in general be three levels deeper than an address decoding structure for a single bank of 32 registers. The need to increase the depth of the address decoding structure has numerous disadvantages that weigh heavily when considered in light of the fact that only 32 of the registers at a time are program visible. Increasing the depth of the address decoding structure has the disadvantage of reducing the speed with which the registers can be accessed, and could possibly define a limit on the highest master clock rate at which the instruction processing apparatus can operate. In a VLSI implementation, complex decoding structures are costly in terms of space required, particularly when contrasted with the higher utilization of space made by highly regular structures such an array of cells. Separately, the large number of registers involved in a multi-bank register file themselves are costly in terms of space required. Once again, this disadvantage weighs heavily when considered in light of the fact that only 32 of the registers at a time are program visible. Although only 32 of the registers at a time are program visible, at least some of the other registers are typically performing a useful function with respect to saving a stack of data. If nesting of routines occurs to a sufficient depth, all the register windows will be in use with respect to saving the stack of data. If nesting occurs beyond a predetermined depth, an overflow operation needs to be carried out. With regard to such an overflow operation, the Berkeley RISC article refers to a trap to a software routine. In other words, even though as many as 138 registers are provided in accord with the disclosed approach, it is still necessary to account for the relatively infrequently occurring situation in which nesting depth exceeds 8; and, when that situation does occur, there is a very substantial penalty involved in interrupting the execution of the program to run the software routine to handle the overflow. Another undesirable effect of this is that it introduces other complexities that led to a decision to reserve a portion of address space solely for use in regard to an operation to determine whether a pointer points to a register or to a memory location for overflow.

The above-described matters are representative of factors demonstrating that a need exists for an improved mechanism for supporting routines having instructions for assessing arguments and local variables, and for communicating arguments between such routines.

## Summary of the Invention

This invention is based on a new and advantageous approach to the organization and operation of a mechanism in an instruction processing apparatus to provide support for routines. The invention can be regarded as residing in a combination of elements incorporated in such mechanism and alternatively can be regarded as residing in a method.

As to defining the invention in terms of elements incorporated in a mechanism in an instruction processing apparatus, a combination of the elements provide support for communiction of arguments between routines. This combination comprises a register file comprising a set of addressable registers. A first sub-set of the registers and a second sub-set of the registers define a plurality of register pairs. Each register pair includes a respective one of the registers in the first sub-set and a respective one of the registers in the second sub-set. This combination further comprises sub-set allocating means having a first state and a second state. The first state is for allocating the first sub-set as a group for incoming arguments and the second sub-set as a group for outgoing arguments. The second state is for allocating the second sub-set as a group for incoming arguments and the first sub-set as a group for outgoing arguments. This combination further includes register-access control means for enabling each of successively invoked routines to access all the registers that define the register pairs. The register-access control means includes register-selecting means for supporting a predetermined type of instruction, which predetermined type of instruction contains a state-independent reference for use in forming an address to select a register. The register-selecting means includes address-altering means controlled by the sub-set allocating means for swapping the addresses of the two registers of each register pair to enable communication of arguments between calling and called routines without inter-register transfers of arguments. Inasmuch as all the registers that define the register pairs are accessible in each of successively invoked routines, this combination has significant advantages with respect to simplicity of implementation and attendant high speed for access to such registers. These advantages are rendered possible because of the provision for swapping the addresses for these pairs, and these advantages are gained and combine with the advantageous operation of communicating arguments without inter-register transfers.

The invention can also be defined in terms of a combination of elements in a mechanism that provides support for routines having instructions for accessing arguments and local variables. This mechanism comprises a program-visible register file for storing data including a plurality of arguments and a plurality of local variables. Each such argument and each such local variable is stored in a separately-addressable register of the register file to support independent access during instruction processing within a routine. This mechanism further comprises a buffer memory organized to define a plurality of equal-width buffer lines, the width of which equals the sum of the widths of a plurality of the registers of the register file. This mechanism further comprises circuit means coupled between the register file and the buffer memory, which includes means responsive to an instruction to call a routine for saving a buffer line in a parallel-transfer operation in which arguments that were passed to a calling routine together with local variables used in the calling routine are concatenated and saved in parallel.

As to defining the invention in terms of a method, the invention provides a method of operating an instruction processing apparatus to support passing of an argument from a calling routine to a called routine. This method comprises establishing a first of first and second states such that the first state is defined during execution of instructions of the calling routine that contain operand references to a register file. This method further comprises saving an argument in a register of the register file selected on the basis of a logical function of the presently defined state and an instruction operand having a predetermined value in accord with a convention applicable to referencing an outgoing argument. This method further comprises establishing the second of the first and second states such that the second state is defined during execution of instructions of the called routine that contain operand references to the same register file. This method further comprises retrieving the argument from the register file by selecting the register containing it on the basis of a logical function of the presently defined state and an instruction operand having another predetermined value in accord with a convention applicable to referencing an incoming argument.

In accord with another definition of a method for practicing the invention, there is provided a method of operating an instruction processing apparatus to support routines having instructions for accessing arguments and local variables. This method comprises saving a plurality of arguments and a plurality of local variables in a program-visible register file, each such argument and each such local variable being stored in a separately-addressable register of the register file to support independent access during instruction processing within a routine. This method further comprises executing a call instruction in a calling routine to call a called routine, and in the course of doing so carrying out a parallel transfer operation in which arguments that were passed to the calling routine together with local variables used in the calling routine are concatenated and saved in parallel in a buffer memory organized to define a plurality of equal-width buffer lines, the width of which equals the sum of the widths of a plurality of the registers of the register file.

In addition to the features of the invention that are summarized above, the invention provides numerous other new and advantageous described below with reference to the preferred embodiment. Preferably, the instruction apparatus in which the invention is incorporated is embodied in a single integrated circuit chip. Another particularly preferred feature resides in the use of a cache memory to define the buffer memory referred to above. These numerous new and advantageous features are included in the recitations of the appended claims.

## Brief Description of the Drawings

FIG. 1 is a simplified general block diagram of a system including a preferred embodiment of the invention;

FIG. 2 comprises FIGS. 2A, 2B, and 2C, which are sketches illustrating conditions of operation with respect to data stored in registers of a program-visible register file at successive stages of operation of the preferred embodiment of this invention;

FIG. 3 comprises FIGS. 3A, 3B, and 3C; FIG. 3A is detailed block diagram of a replicated circuit element which includes a memory element used to implement registers in the program-visible register file; FIG. 3B shows a representative one of the registers and related gating circuitry in a block diagram format that is keyed to FIG. 3A; and FIG. 3C is keyed to FIG. 3B and shows the same representative register and gating circuitry in a block diagram format that is used in FIGS. 4D and 4E; and

FIG. 4 comprises FIGS. 4A through 4E, and shows structural relationships among elements combined

4

in the mechanism of this invention.

Detailed Description

This detailed description explains the construction and operation of the presently preferred embodiment of this invention, and describes certain features of an instruction processor that defines the environment in which it is preferably incorporated. The principles of the invention are such that the invention is applicable to providing support for routines within the environment of many other information processors, and many of the detailed matters set out below are included in this description to facilitate exposition of these principles within the context of a concrete example.

The preferred embodiment resides in a combination of elements incorporated in a single-chip instruction processor. The state of the art in integrated circuit fabrication technology is such that it is practical to incorporate in excess of 500,000 devices within a single chip measuring approximately 450 mils by 450 mils. This is practical now because of the availability of 1.2 micron CMOS (Complementary Metal Oxide Semiconductor) technology.

As is well known, data can be transferred at a much higher rate within a chip than between chips. It is practical using state of the art CMOS technology to employ a very high basic clock rate for sequencing operations within a chip; more particularly, it is practical to employ a rate in excess of 50 megahertz to provide a clock cycle as short as about 18 nanoseconds. As to inter-chip transfers being slower, this is especially the case with respect to data transfers between the instruction processor and memory. Such data-transfer cycles with memory typically consume in the neighborhood of about 12 basic clock cycles.

The high penalty associated with a data-transfer cycle with memory provides substantial motivation for an architectural approach based on RISC principles. Preferably, the instruction processor chip in which this invention is incorporated is based on RISC concepts such that most instructions are designed to execute in one clock cycle.

Preferably, the instruction repertory is based on a 64-bit instruction format to provide a 32-bit control word portion and a 32-bit literal portion. The literal portion is used for literal data, absolute addressing, and absolute addresses for branching. The control word portion is used to specify many different actions that are herein categorized into various types.

Most of the instructions in the instruction repertory can be categorized as a type that involves referencing registers including certain registers in a program-visible register file that is a significant element of the preferred embodiment of this invention. In these instructions, the control portion is divided into numerous fields including an OpCode field and other fields that provide for specifying two register operands. One of these two fields is referred to as an OpA field; the other as an OpB field.

In the preferred embodiment, there are 32 registers referred to as registers R0 to R31 that are in the program-visible register file referenced via the use of such a field. In addition, there are various special purpose registers that can be referenced via the use of such a field. Most of these special purposes registers are not relevant to the construction and operation of this invention. A few of these special purpose registers bear mention here. These include a central accumulator (CA), a window pointer (WP), and a return window pointer (RWP). There are various registers and latches within the instruction processor that are not directly referenced by any instruction. These include a Program Counter (PC) register, and various instruction and address latches.

The OpA field is 6-bits wide, and the OpB field is likewise 6-bits wide. A Latch Instruction Register (LIR) includes cells for storing these fields during instruction execution. A representative general example of this type of instruction is an ADDL instruction; it is used for integer addition. A representative specific example of the ADDL instruction is to add the contents of a register specified by the OpB field to the contents of the register specified by the OpA field, and store the result in the register specified by the OpA field.

Some of the other instructions in the instruction repertory can be categorized as a type that involves referencing memory. This type includes various specific versions of basic load and store instructions. This load/store type of instruction is relevant here for two reasons. The first reason is that they contain an OpB field that specifies a register such as a register of the program-visible register file. The second reason relates to a preferred feature of this invention whereby a cache memeory is used to define a buffer memory that cooperates with the register file with regard to a highly advantageous parallel-transfer operation described in detail below. This same cache is used to store data on chip for use with regard to this load-store type of instruction. There are numerous specific versions of the basic load-store type of instruction. These versions support three type of addressing modes: absolute, register deferred, and central accumulator deferred. All data types are supported by the load and store instructions.

Other instructions in the instruction repertory can be categorized as a type that involves instruction sequencing. This type includes various specific versions of basic call and return instructions. In general, these instructions are executed more frequently than any of the other instructions in the instruction repertory. For this reason, it is very important to the overall operation of the system that they execute rapidly.

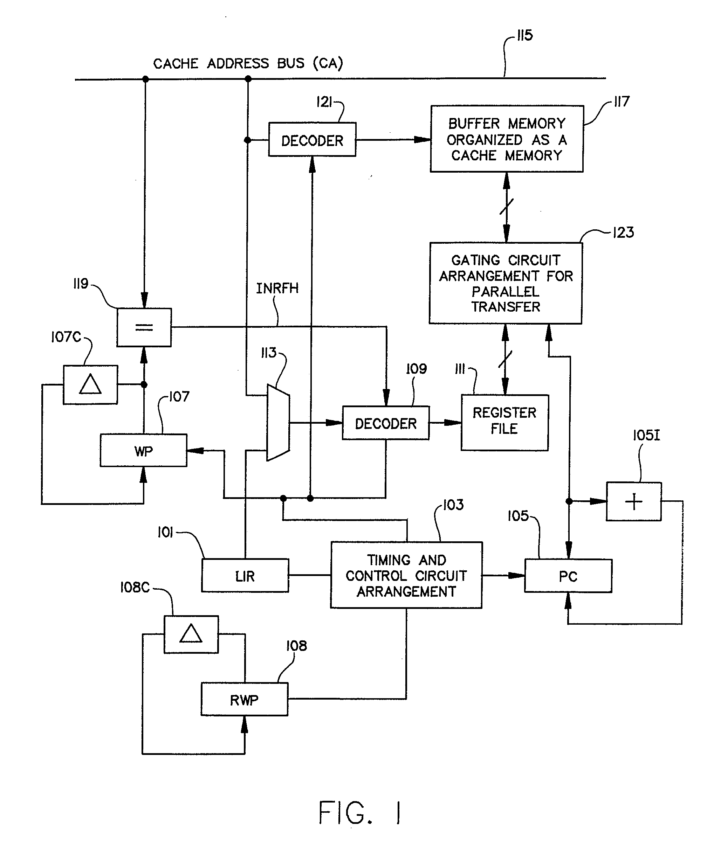

Having provided the foregoing general introduction, there will now be described with reference to FIG. 1, a block diagram showing elements of an instruction processor that are pertinent to this description of the preferred embodiment of this invention.

A Latch Instruction Register (LIR) 101 has 32 register cells for storing the Control Word portion of the instruction currently being executed. The Op Code field in the control word portion is decoded within a timing and control circuit arrangement 103 which produces numerous sequencing control signals used in executing each of the many instructions in the instruction repertory. The implementation of timing and control circuit arrangement 103 is not pertinent to this description of the preferred embodiment of this invention, and the prior art teaches the principles for implementing a suitable timing and control arrangement for the instruction processor.

Out of the numerous control signals produced by timing and control circuit arrangement 103, a few bear mention here. One of these is used, as is conventional in this art, to increment the program counter (PC 105) of the instruction processor. A functional block 105I shown in FIG. 1 indicates the function of incrementing PC 105. Every instruction in the instruction repertory is 8 bytes long. Memory addresses are defined to the byte level. An arbitrary value j stored in PC 105 means that the next instruction resides in 8 consecutive memory locations referenced as j through j+7. Thus, each incrementation of PC 105 involves an increase of 8.

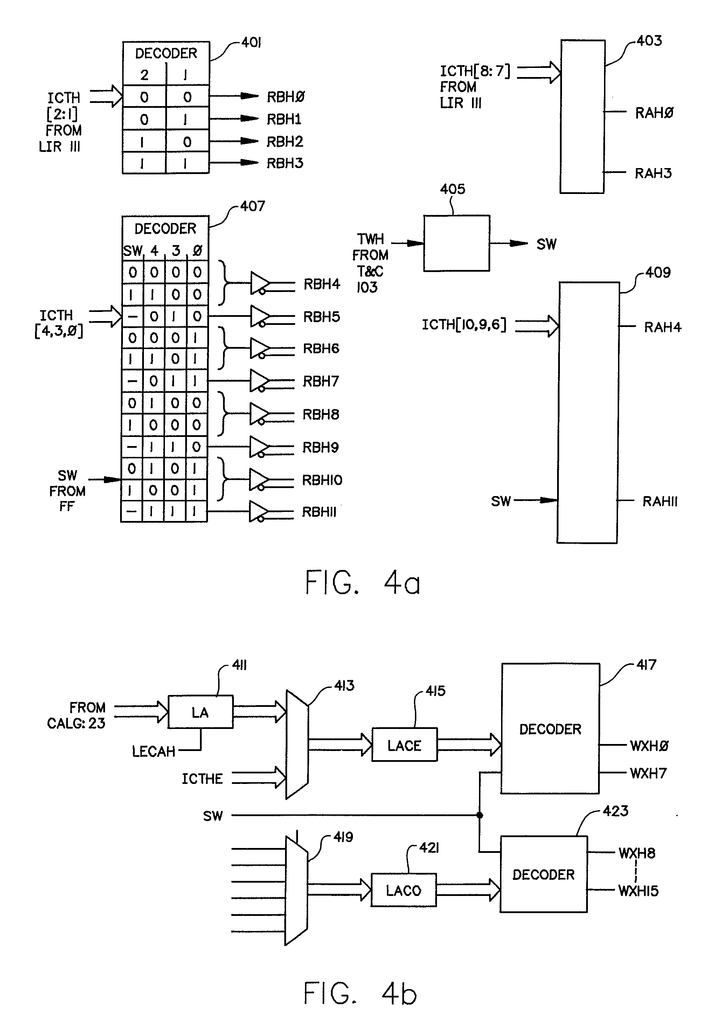

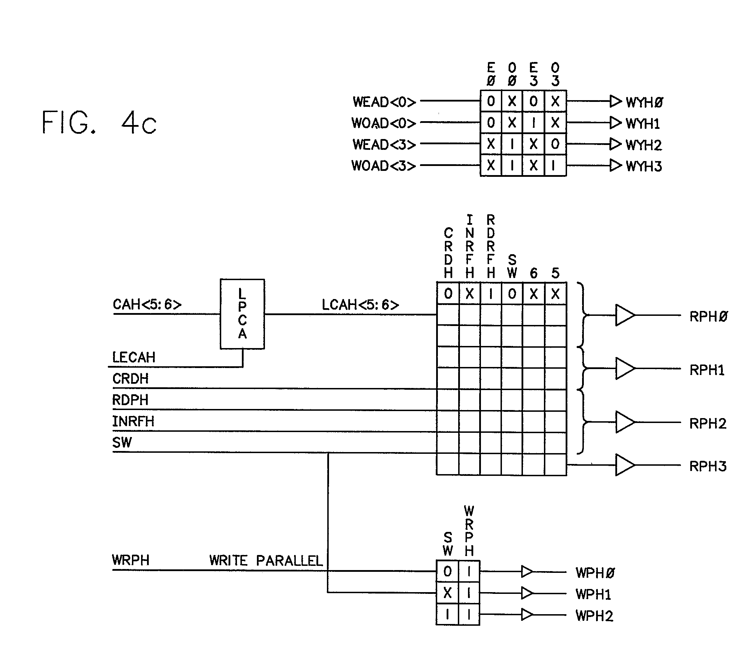

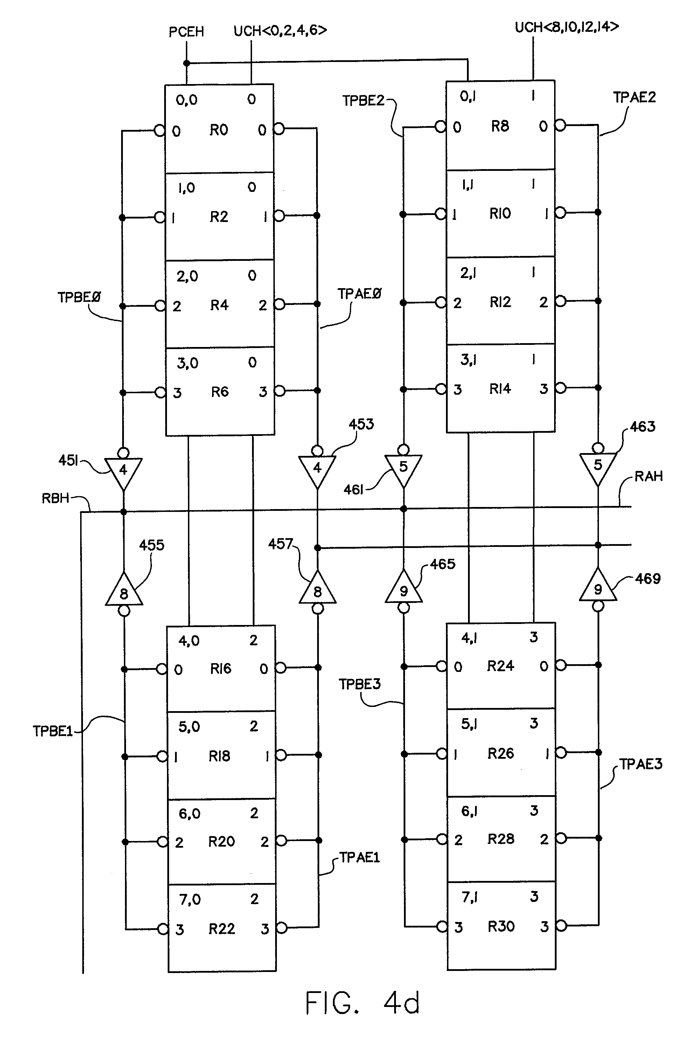

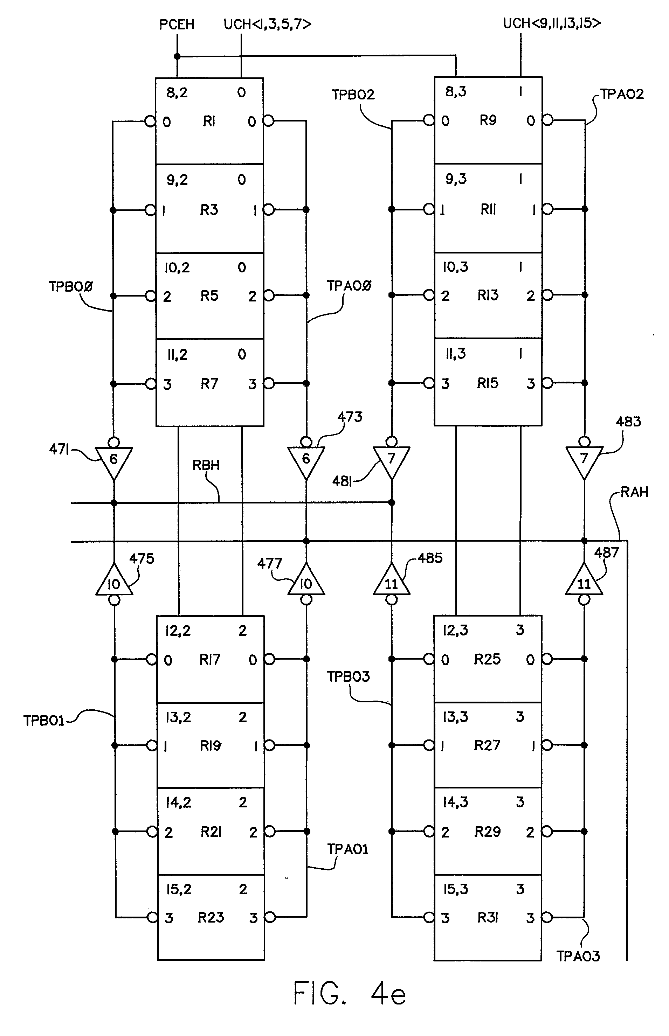

Another of these numerous control signals is used to control the Window Pointer Register (WP 107). A functional block 107C shown in FIG. 1 indicates the function of changing WP 107 in steps of 64. Another control signal is used to control the Return Window Pointer Register (RWP 108). A functional block 108C shown in FIG. 1 indicates the function of changing RWP 108 in steps of 64. Other control signals are used to control a decoding circuit arrangement 109 that is described in more detail below with reference to FIG. 4. The general function of decoding circuit arrangement 109 is to produce register selection signals for use in accessing the registers R0 to R31 that are defined within Register File 111, as described in detail below with reference to FIG. 4. Decoding circuit arrangement 109 produces these register selection signals as a logical function of a parallel-by-bit signal that is applied to it by a multiplexer 113. One parallel-by-bit input of multiplexer 113 is connected to instruction register 101. Another parallel-by-bit input of multiplexer 113 is connected to a cache address bus 115. In viewing this invention from one aspect, one of its structural elements is a buffer memory, and that buffer memory is preferably organized as a cache memory. In this regard, FIG. 1 depicts a buffer memory 117 that is organized as a cache memory.

The implementation of buffer memory 117 as a cache memory is preferred not only for the purpose of this invention but also for independent reasons with regard to providing an instruction processor organized for extremely high-speed data processing. As presently organized, the instruction processor has four cache structures. One of these is referred to as an Integrated Data Cache (IDC); it is so called because it provides, as part of a unified structure, for storing instructions and for storing data. It is this IDC that in accord with this invention participates in a new and advantageous parallel-transfer operation to communicate with registers in Register File 111 and with PC register 105. The implementation of the other three cache structures is not relevant to this description of the preferred embodiment of this invention in that they participate, respectively, in instruction buffering between the IDC and the instruction register (IB cache), virtual-to-physical address translation with regard to accessing external memory (translation cache), and special functions for loading page table entries into the cache that participates in virtual-to-physical address translation (special cache). The IDC, the translation cache, and the special cache share a common data bus referred to as a Unified Cache Bus.

With regard to the IDC, it is organized into cache lines each wide enough to store 512 bits that can define either 64 data bytes (equivalent to 16 longwords) or, alternatively, 8 instructions. It is further organized for use in implementing a write-back cache strategy, and accordingly contains cells for storing dirty bits, as well as tags for use in associative look-up operations to determine when an access can effectively be made to the cache to avoid the penalty associated with an access to external memory.

Whereas an access to the IDC provides a faster way to transfer data than an access to external memory, an access to a register in Register File 111 is even faster, albeit not with such a great difference. The difference is sufficient such that, if data referenced by a predetermined instruction such as a load instruction can be found in a register in register file 111, it is preferable to retrieve it from that register. In this regard, a comparator 119 is provided to selectively assert an IN Register File (INRFH) signal. One of the parallel-by-bit inputs of comparator 119 is connected to cache address bus 115; its other such input is connected to WP register 107. When the address being supplied on cache address bus 115 to access the IDC is within the range involved in the mapping of register file 111 to memory, comparator 119 asserts the INRFH signal; otherwise, it does not.

As to accessing the IDC, there is provided a decoder 121 for responding to signals carried by cache address bus 115 to participate in selecting a cache line to access.

With respect to registers R0 to R31 in Register File 111, these registers define a set of addressable registers of which a first sub-set (registers R0 to R7) and a second sub-set (registers R16 to R23) define a plurality of register pairs. There are 8 such register pairs: 1) R0 and R16; 2) R1 and R17; 3) R2 and R18; 4) R3 and R19; 5) R4 and R20; 6) R5 and R21; 7) R6 and R22; and 8) R7 and R23.

As described in more detail below with reference to FIG. 4, decoding circuit arrangement 109 includes a subset allocating means having two states. One of these states is for allocating registers R0 to R7 as a group for incoming arguments, and for allocating registers R16 to R23 as a group for outgoing arguments. The other state is for a swapped allocation; that is, registers R16 to R23 are allocated for incoming arguments, and registers R0 to R7 are allocated for outgoing arguments.

To facilitate further description of various matters relating to accessing the registers of Register File, the following notational system will be used. The expression R(i) designates the register having logical address i. For example, in the first state, register R0 is register R(0), and register R16 is register R(16). On the other hand, in the second state, register R0 is register R(16), and register R16 is register R(0).

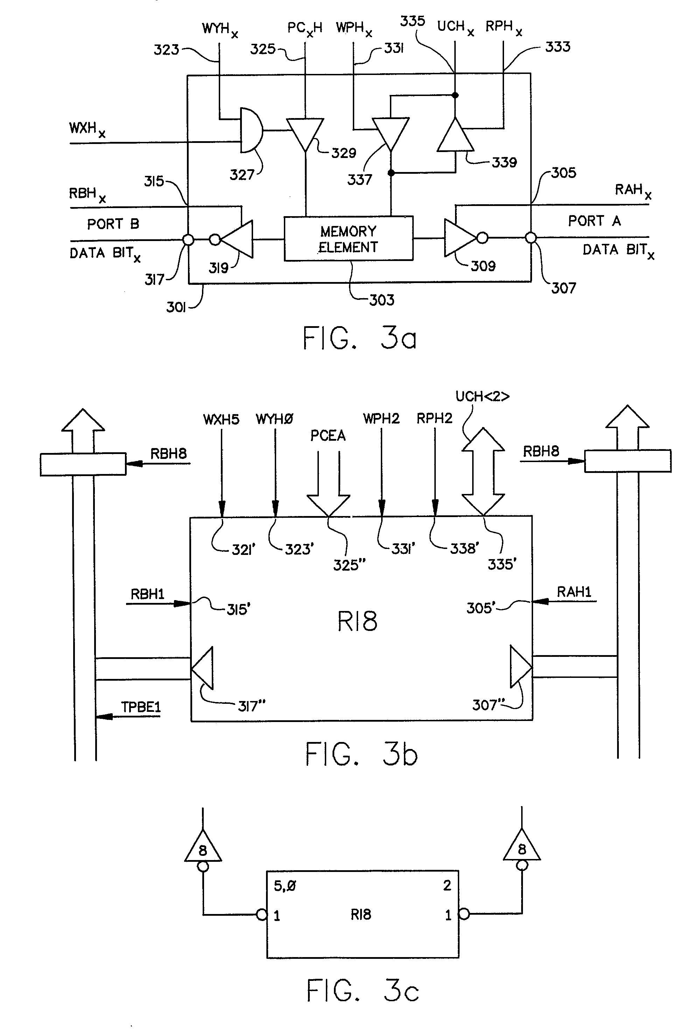

To support the parallel-transfer operation that involves a transfer between registers of Register File 111 and the IDC defining buffer memory 117, there is provided a gating circuit arrangement 123. The implementa tion of gating circuit arrangement 123 in the preferred embodiment is described in detail below with reference to FIGS. 3 and 4. The general function of gating circuit arrangement 123 is to support bi-directional transfers of 16 concatenated longwords (i.e., 512 bits at a time). Each such transfer occurs between, on the one hand, a selected cache line and, on the other hand, registers R(0) to R(14) and PC 105.

Within an arbitrary routine designated as routine m, registers R(0) to R(7) are allocated to store arguments that were passed to routine m by an outer nested routine m-1. Also within routine m, registers R(8) to R(14) are allocated to store local variables. If routine m contains instructions for a calling sequence to invoke a routine m+1, routine m will store its outgoing arguments in registers R(16) to R(23). On the call instruction to invoke routine m+1, gating circuit arrangemtn 123 participates in the saving into a selected cache line of 15 concatenated longwords (480 bits) transferred from R(0) to R(14), together with the 32-bit address transferred from PC 105. On a subsequent return instruction to return control to routine m, gating circuit arrangement 123 participates in the reading from a selected cache line of 15 concatenated longwords (480 bits) transferred to R(0) to R(14), together with the 32-bit address transferred to PC 105.

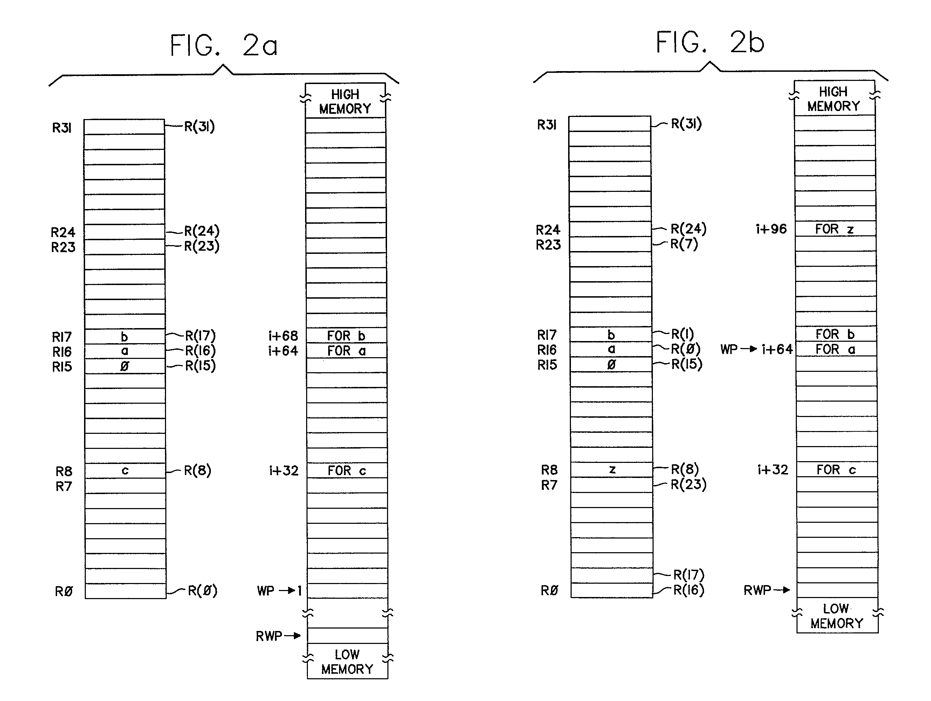

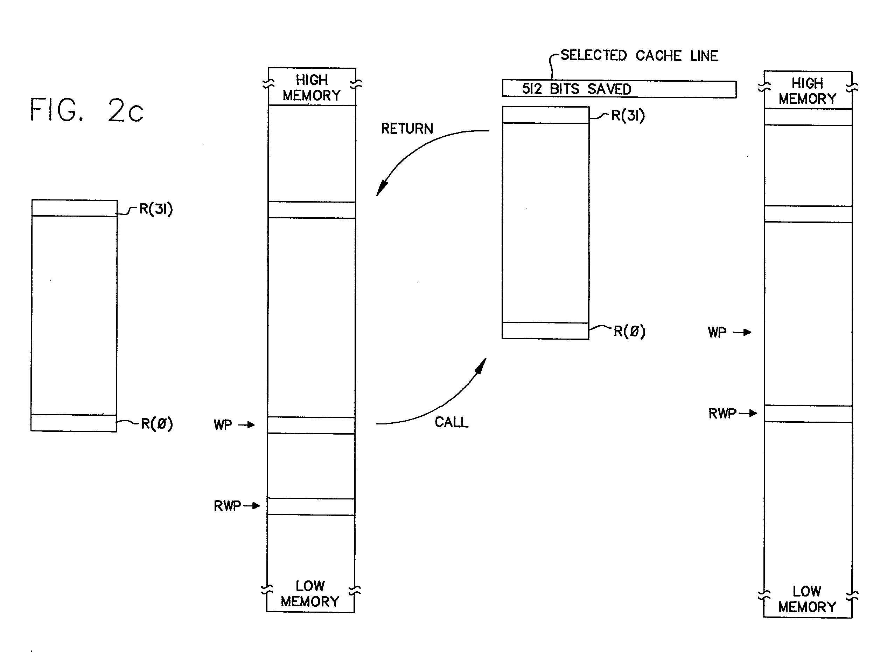

With reference to FIG. 2, there will now be described in further detail how the program-visible register file participates in a representative process involving a calling sequence and an ensuing return sequence. With regard to this representative process, there is set forth below an exemplary code fragment (in C language format):

```
main ()
{
int a,b,c;
.
.
.
foo (a,b);
.
.
.
}
foo (x,y)
int x,y;
{
int z;
.
.
}
```

The foregoing code fragment relates to the definition of a main routine, in which variables a, b, and c are declared to be integer-type variables local to the main routine, and in which there is a call to a routine named "foo." As to the call to foo, this involves passing two parameters, viz, a and b. The bottom portion of this code fragment relates to the declaration of foo as a routine for which dummy incoming arguments x and y are declared to be of integer type. Within this declaration, there is a statement declaring an integer variable z to be local to foo.

Fig. 2A is in the nature of a snapshot of the conditions of the memory and the program-visible register file just before execution of the call instruction to invoke the routine foo. At this point, registers R0 to R31 have logical addresses 0 to 31, as indicated in FIG. 2A by the sequence of R0 to R31 being identical to the sequence R(0) to R(31). In other words, a value of 0 in an operand referencing field such as the OpA field addresses register R0, a value of 1 addresses register R1, etc.

As part of the sequence to prepare for the call to foo, the values of the outgoing arguments a and b have been stored in registers R16 and R17. At this point, the calling routine is using register R8 to store the value of the integer variable c, which will not be needed in the foo routine but will be needed again when control later returns to the calling routine. With respect to register R15, it has arbitrarily chosen in this embodiment to be the register for storing a very frequently needed value, i.e, 0. Because this register has been chosen to be the one for storing this frequently needed value, it is never written into, nor is there any need to save it elsewhere incident to growth of a stack.

Also at this point, WP register 107 contains the address of a memory location i. The address stored in WP register 107 defines a 32-longword window with respect to memory. In accord with the memory mapping involved in the window represented in FIG. 2A, memory locations are allocated for storing a memory stack of data including the values of a, b, and c. The 4 byte-size memory locations allocated for storing the value of the longword a begin with i+64. The 4 byte-size memory locations allocated for storing the value of the longword b begin with i+68. The 4 byte-size memory locations allocated for storing the value of the longword c begin with i+32.

As for RWP 108, it points to memory location i-64. In this regard, each window corresponds to 32 longwords, or, equivalently, 128 bytes. The windows for adjacent routines in a nest of routines overlap such that the upper half of the outer window becomes the lower half of the inner window.

FIG. 2B is in the nature of a snapshot of the conditions of the memory and the program-visible register file just after execution of the call instruction to invoke the routine foo. FIG. 2C is in the nature of a composite of FIGS. 2A and 2B, and illustrates how the windows overlap.

During execution of the call instruction that occurred between the snapshots of FIGS. 2A and 2B, the mechanism according to this invention has caused a multi-pair address swap to occur. Now, a first sub-set of registers, viz, registers R0 to R7 have logical addresses 16 to 23, and conversely a second sub-set of registers, viz. registers R16 to R23 have logical addresses 0 to 7. The sub-set allocation extant at this point is indicated in FIG. 2B as follows. The sequence of R0 to R7 corresponds to the logical sequence R(16) to R(23); the sequence of R8 to R15 oorresponds to the logical sequence R(8) to R(15); the sequence of R16 to R23 corresponds to the logical sequence R(0) to R(7); and, the sequence of R24 to R31 corresponds to the logical sequence R(24) to R(31).

One aspect of the above-mentioned swapping is that the routine foo can find its incoming arguments at logical addresses in accord with an advantageous communication convention, whereby any called routine can expect to find its incoming arguments in the lower logical addresses of Register File 111 without regard to the actual physical address of the register. In other words, this hardware feature for speeding up calls and returns is transparent to a programmer who does not need to take it into account in writing programs, even programs such as compilers.

One reason why this hardware feature speeds up calls and returns is that the communication of arguments does not require inter-register transfers. As indicated in FIG. 2B, the value of a remains in register R16, even though it now appears to be in register R(0), and the value of b remains in register R17, even though it appears to be in register R(1).

Also during execution of the call instruction that occurred between the snapshots of FIGS. 2A and 2B, the mechanism according to this invention has caused a remapping to define a new window that overlaps the preceding window. Now WP 107 points to memory location i+64, which had been allocated for storing a. Also, RWP 108 points to memory location i.

FIG. 2B also shows the value of the variable z as being currently stored in register R8, which is the register that before the call had been storing the value of the variable c. The value of c has not been lost, however. It is now stored in a high-speed buffer memory location; more particularly, it is stored in a cache line of the IDC and mapped to memory.

With regard to the mapping, memory location i+32 continues to be allocated for storing the value of c. Further, with referecne to FIG. 2C, the value of c is stored as part of the 512 bits saved in the cache line.

These 512 bits include 224 bits transferred from R8 to R14, to save the values of variables local to the calling routine. Because register R15 has been the one chosen for the special purpose function of storing the predetermined frequently needed value of 0, there is no reason to have it participate in the parallel-transfer operation. Instead, 32 bits from PC 105 are inserted in the concatenated group transferred into the cache line. The remaining 256 bits are transferred from registers R(0) to R(7) to save the values of arguments that were passed to the calling routine. It bears mention that these 256 bits can be transferred from either registers R0 to R7, or from registers R16 to R23. If, as is the case in this example of the call to foo, registers R0 to R7 are the sub-set that happens to have been allocated for incoming arguments to the calling routine, it is these registers that participate in the parallel-transfer operation. If registers R16 to R23 happen to have been so allocated (as is the case here following this invocation of the routine foo), then on a call they would participate in the parallel-transfer operation.

Also during execution of the call instruction, the window-pointer register is incremented. Accordingly, during execution of the routine foo, the window-pointer points to memory address (i+64), which is 64 bytes or, equivalently, 16 longwords higher than where it pointed before the call to foo. As best shown in FIG. 2C, the successive windows overlap. The window for the calling routine begins at memory location i and ends at memory location i+127. The window for the called routine begins at memory location i+64 and ends at memory location 191. As best shown in FIG. 2C, the memory allocation within the window for the called routine is such that: locations starting at i+64 are for a; locations starting at i+68 are for b; and locations starting at i+96 are for z.

On a return, the foregoing process is effectively reversed. During execution of the return instruction to return control from the routine foo to the routine that called it, the mechanism according to this invention causes another address swap to occur. Now, as in FIG. 2A, the first sub-set of registers, viz, registers R0 to R7 again have logical addresses 0 to 7, and conversely the second sub-set of registers, viz, registers R16 to R23 again have logical addresses 16 to 23.

Further, the mechanism according to this invention causes another parallel-transfer operation, this one in the direction to transfer from a selected cache line to selected registers. As a result, the variable c is back where it was before the call to invoke foo; that is, as shown in FIG. 2A, it is stored in register R8. Also, the parallel-transfer operation in this direction provides for restoring of the PC 105. Further, the window-pointer has been decremented so that it again points to memory location i.

To summarize and somewhat amplify on the matters set out above with reference to FIG. 2, the program-visible register file is logically divided into four sections: logical addresses 0 through 7 correspond to registers that are currently available for use for incoming arguments to a routine; 16 through 23 correspond to registers that are currently available for use for outgoing arguments, 8 through 14 correspond to registers that are always available for use for local variables, 15 corresponds to the register that always renders the value 0 available, and 24 through 31 correspond to the registers that are always available for use for locals and temporaries. Suitably, register R14 is used to map a program-defined frame stack for routines having more than 8 arguments.

On a call instruction, the contents of a large number of registers are saved in a short period of time because of the parallel-transfer operation. Similarly, on a return instruction, a large number of registers are restored in a short period of time because of the parallel-transfer operation. Further, the size and full utilization of the program-visible file, particularly when contrasted with prior art multi-bank register window files, provides significant advantages, including the fact that access times need not be prolonged because of deep and cumbersome address decoding structures. An additional feature directed to high-speed operation concerns RWP 108. In particular, on a return while registers are being restored via the parallel-transfer operation, RWP 108 is decremented at the same time. In this way, the RWP 108 always stores the needed address by the time it is needed and there is no need to delay a fetch pending determination of the needed address.

With reference to FIG. 3A, there will now be described a register cell 301 that is replicated many times in the preferred embodiment of this invention. Each of the 32 registers of the register file includes 32 of these register cells. Thus, a total of 1024 of these register cells are included in the register file.

Each such replicated register cell 301 includes a memory element 303 for storing a bit. Suitably, the CMOS circuitry that implements memory element 303 is a static memory cell.

Each register cell 301 defines 10 nodes for connection to conductors used to interconnect the register cells. These 10 nodes divide into four groups corresponding to four selectable register ports referred to as Port A, Port B, Port C, and Unified Cache port. Each of the selectable register ports provides access to a register so that a 32-bit wide longword can be transferred in parallel-by-bit format into and out of the register.

With respect to Port A, each register cell 301 includes a node 305 and a node 307. On node 305, register cell 301 receives a read selection signal designated as $RAH_x$. The designation of this signal is in accord with a nomenclature system in which "RA" indicates Read Port A, "H" indicates high voltage for asserting a true value, and the subscript "x" indicates a bit index distinguishing the 32 bits of a longword from each other.

In each register cell 301, a gating circuit 309 selectively applies the output of memory element 303 to node 307. Gating circuit 309 is suitably implemented by a CMOS circuit arrangement generally referred to as a tri-state inverter. While the $RAH_x$ signal is low, gating circuit 309 presents a high output impedance such that register cell 301 will not affect any signal being transferred on a Port A data conductor. While the $RAH_x$ signal is high, gating circuit 309 applies the complement of the output of memory element 303 to node 307.

With respect to Port B, each register cell 301 includes a node 315 and a node 317. On node 315, register cell 301 receives a read selection signal designated as $RBH_x$. The designation of this signal is in accord with the above-mentioned nomenclature system; more particularly, "RB" indicates Read Port B, "H" indicates high voltage for asserting a true value, and the subscript "x" indicates the bit index.

In each register cell 301, a gating circuit 319 selectively applies the output of memory element 303 to node 317. Gating circuit 319 is suitably implemented by the same kind of tri-state CMOS inverting circuit arrangement as is used to implement gating circuit 309. While the $RBH_x$ signal is low, gating circuit 319 presents a high output impedance such that register cell 301 will not affect any signal being transferred on a Port B data conductor. While the $RBH_x$ signal is high, gating circuit 319 applies the complement of the output of memory element 303 to node 317.

With respect to Port C, each register cell 301 includes a node 321, a node 323, and a node 325. On node 321, register cell 301 receives a write selection signal designated as $WXH_x$. The designation of this signal is in accord with the above-mentioned nomenclature system. More particularly, "W" indicates Write, "X" indicates one element of an X and Y array index that references a register, "H" indicates high voltage for asserting a true value, and the subscript "x" indicates the bit index.

On node 323, register cell 301 receives a write selection signal designated as $WYH_x$. The designation of this signal is in accord with the above-mentioned nomenclature system. More particularly, "W" indicates Write, "Y" indicates one element of the X and Y array index that references a register, "H" indicates high voltage for asserting a true value, and the subscript "x" indicates the bit index.

On node 325, register cell 301 receives a data signal designated as $PC_xH$. The designation of this signal is in accord with the above-mentioned nomenclature system. More particularly, "PC" indicates Port C, the subscript "x" indicates the bit index, and "H" indicates high voltage for asserting a true value.

Each register cell 301 includes an arrangement of gates comprising an AND gate 327 and a gating circuit 329. Gating circuit 329 is suitably implemented by the a tri-state CMOS circuit arrangement which, unlike the circuit arrangement used to implement gating circuit 309 and to implement gating circuit 319, is non-inverting.

While both the $WXH_x$ signal and the $WYH_x$ signal are high, AND gate 327 activates gating circuit 327 to cause it to write into memory element 303 the present value of the $PC_xH$ signal. Whenever either the $WXH_x$ signal is low or the $WYH_x$ signal is low, AND gate 327 de-activates gating circuit 329 so that memory cell 303 is not affected by any signal on the conductor that carries the $PC_xH$ signal.

With respect to the UC Port, each register cell 301 includes a node 331, a node 333, and a node 335. On node 331, register cell 301 receives a write selection signal designated as $WPH_x$. The designation of this signal is in accord with the above-mentioned nomenclature system. More particularly, "W" indicates Write, "P" indicates Parallel, "H" indicates high voltage for asserting a true value, and the subscript "x" indicates the bit index.

On node 333, register cell 301 receives a read selection signal designated as $RPH_x$. The designation of this signal is in accord with the above-mentioned nomenclature system. More particularly, "R" indicates Read, "P" indicates Parallel, "H" indicates high voltage for assert ing a true value, and the subscript "x" indicates the bit index.

On node 325, register cell 301 either sends or receives a data signal designated as $UC_xH$. The designation of this signal is in accord with the above-mentioned nomenclature system. More particularly, "UC" indicates the Unified Cache port, the subscript "x" indicates the bit index, and "H" indicates high voltage for asserting a true value.

Each register cell 301 includes an arrangement of gates comprising a gating circuit 337 and a gating circuit 339. These gating circuits are connected as described below with respect to the interconnection of replicated cells to implement gating circuit arrangement 123 for parallel-transfer operations. Each of the gating circuits 337 and 339 is suitably implemented by the same kind of non-inverting tri-state CMOS circuit arrangement as is used to implement gating circuit 329. While the $WPH_x$ signal is high, gating circuit 337 is activated to cause it to write into memory element 303 the present value of the $UC_xH$ signal. Whenever the $WPH_x$ signal is low, gating circuit 337 is de-activated so that memory cell 303 is not affected by any signal on the conductor that carries the $UC_xH$ signal. While the $RPH_x$ signal is high, gating circuit 339 is activated to cause it to apply the output of memory element 303 to node 335 to define the present value of the $UC_xH$ signal. Whenever the $RPH_x$ signal is low, gating circuit 339 is de-activated so that memory cell 303 does not affect any signal on the conductor that carries the $UC_xH$ signal.

As to the interconnection of the 1024 register cells, the structure involved in this interconnection will now be described in terms of layers. A first layer relates to the interconnection of register cells to define registers. A second layer relates to the connection of the registers via certain multiplexing circuits and associated multi-conductor signal propagating paths.

With respect to this first layer, each of 32 register cells that are interconnected to define a 32-bit register is associated with certain register selection conductors.

For the purpose of a longword read of a register in which all 32 bits stored in the register propagate to one of the signal-propagating paths referred to as a Port A bus, every register cell in the register has its node 305 coupled to a common register-selection conductor to receive the same read signal to activate in parallel each gating circuit 309 in the register.

For the purpose of a longword read of a register in which all 32 bits stored in the register propagate to one of the signal-propagating paths referred to as a Port B bus, every register cell in the register has its node 315 coupled to a common register-selection conductor to receive the same read signal to activate in parallel each gating circuit 319 in the register.

For the purpose of a longword write into a register in which 32 bits are stored into the register, the 32 bits propagate to the register via a signal-propagating path referred to as a Port C bus that is connected to every register that can participate in a longword write. Every register cell in the register has its node 321 coupled to a common register-selection conductor to receive a predetermined write-control signal, and every register cell in the register has its node 323 coupled to a common register-selection conductor to receive another predetermined write-control signal. Thus, the AND gate 327 in each register cell is controlled in parallel to activate the gating circuit 329 in each of the 32 register cells of the register to transfer the data carried by the Port C bus into a selected register.

In the above-mentioned longword transfer operations, only one register at a time sends a longword and only one register at a time receives a longword. As to the parallel-transfer operation, multiple longwords are concatenated and transferred in parallel. This parallel-transfer operation can write into registers, in which case each gate 337 of the register cells of multiple registers is activated. This parallel-transfer operation can read from registers, in which case each gate 339 of the register cells of multiple registers is activated.

With respect to the second layer of interconnection, the conductors and multiplexing circuits define multiple tree structures. A tree structure for Port A has 32 branch paths (one for each of the 32 registers in the program-visible register file), 8 trunk paths, and at the root, the Port A bus. Each gating circuit 309 participates in a 4-to-1 multiplexing from a branch path to a trunk path. Other gating circuits external to the register cells and described in more detail below participate in an 8-to-1 multiplexing from a branch path to the Port A bus.

A parallel tree structure is provided for Port B; in this tree structure, each gating circuit 319 participates in the 4-to-1 multiplexing from a branch path to a trunk path.

As to Port C, it comprises conductors used to broadcast longwords for the purpose of the longword write described above. In each such longword write, each AND gate 327 and gating circuit 327 in the selected register is activated. The Port C bus is organized to enable a quadword write, in which one longword is written into one selected register while at the same time another longword is written into another selected register. More particularly, the Port C bus comprises two sets of conductors referred to as PCE (Port C Even), and PCO (Port C Odd).

As for the Unified Cache Port, it comprises 512 conductors that are logically divided into 16 groups with 32 conductors per group. The groups are designated UC <0> through UC <15>.

For convenience of reference, there is set forth below a Table 1 a list of acronyms used in describing the various multi-conductor, parallel-signal propagating paths.

TABLE 1

| Designation | Comment |
|---|---|
| PAB | Port A Bus: 32-bits wide; connected to the outputs of 8 circuit arrangements that each have an input connected to a trunk path; each such trunk path is 32-bits wide and is connected to the output of each of 4 registers as specified below and is connected to the input of a respective one of 8 gating circuit arrangements for an 8-to-1 multiplexing |
| PBB | Port B Bus: 32-bits wide; connected to the outputs of 8 circuit arrangements that each have an input connected to a trunk path |
| PCB | Port C Bus: 32-bits wide for PCE (Even) and 32-bits wide for PCO (Odd) |
| UCB | Unified Cache Bus: 512-bits wide; divided into 16 groups of 32-bits each, viz, UC<0> through UC<15> |
| TPAE0 | Trunk Path to Port A for Even address (#0): for registers R0, R2, R4, and R6 |
| TPAO0 | Trunk Path to Port A for Odd address (#0): for registers R1, R3, R5, and R7 |
| TPAE1 | Trunk Path to Port A for Even address (#1): for registers R16, R18, R20, and R22 |
| TPAO1 | Trunk Path to Port A for Odd address (#1): for registers R17, R19, R21, and R23 |
| TPAE2 | Trunk Path to Port A for Even address (#2): for registers R8, R10, R12, and R14 |
| TPAO2 | Trunk Path to Port A for Odd address (#2): for registers R9, R11, R13, and R15 |
| TPAE3 | Trunk Path to Port A for Even address (#3): for registers R24, R26, R28, and R30 |
| TPAO3 | Trunk Path to Port A for Odd address (#3): for registers R25, R27, R29, and R31 |

11

## TABLE 1 - continued

| Designation | Comment |
|---|---|
| TPBE0 | Trunk Path to Port B for Even address (#0): for registers R0, R2, R4, and R6 |
| TPBO0 | Trunk Path to Port B for Odd address (#0): for registers R1, R3, R5, and R7 |
| TPBE1 | Trunk Path to Port B for Even address (#1): for registers R16, R18, R20, and R22 |
| TPBO1 | Trunk Path to Port B for Odd address (#1): for registers R17, R19, R21, and R23 |
| TPBE2 | Trunk Path to Port B for Even address (#2): for registers R8, R10, R12, and R14 |
| TPBO2 | Trunk Path to Port B for Odd address (#2): for registers R9, R11, R13, and R15 |
| TPBE3 | Trunk Path to Port B for Even address (#3): for registers R24, R26, R28, and R30 |
| TPBO3 | Trunk Path to Port B for Odd address (#3): for registers R25, R27, R29, and R31 |

For further convenience of reference, there is set forth below in Table 2 a list of acronyms used in describing various control signals used in forming addresses to select registers.

## TABLE 2

| Designation | Comment |
|---|---|
| RAH0 to RAH3 | Each is a Read selection control signal for Port A: decoded from bits [1:2] out of bits [0:4] of OpA field; one at a time of these can be true, as a function of the value of OpA field, as follows:<br>RAH0 for values: 0,1,8,9,16,17,24,25<br>RAH1 for values: 2,3,10,11,18,19,26,27<br>RAH2 for values: 4,5,12,13,20,21,28,29<br>RAH1 for values: 6,7,14,15,22,23,30,31 |
| RAH4 to RAH11 | Each is a Read selection control signal for Port A: decoded from 4 bits, including bits [4,3,0] out of bits of OpA field, and a swap bit (SW), one at a time of these can be true, as a function of the value of OpA field and the SW bit, as follows:<br>RAH4:<br>if SW low  --   for values 0,2,4,6<br>if SW high --   for values 16,18,20,22<br>RAH5:<br>(independent of SW)<br>for values 8,10,12,14 |

12

TABLE 2 - continued

| Designation | Comment |
|---|---|
| | RAH6: <br> if SW low -- for values 1,3,5,7 <br> if SW high -- for values 17,19,21,23 <br> RAH7: <br> (independent of SW) <br> for values 9,11,13,15 <br> RAH8: <br> if SW low -- for values 16,18,20,22 <br> if SW high -- for values 0,2,4,6 <br> RAH9: <br> (independent of SW) <br> for values 24,26,28,30 <br> RAH10: <br> if SW low -- for values 17,19,21,23 <br> if SW high -- for values 1,3,5,7 <br> RAH11: <br> (independent of SW) <br> for values 25,27,29,31 |
| RBH0 to RBH3 | Each is a Read selection control signal for Port B: decoded from bits [1:2] out of bits [0:4] of OpB field; one at a time of these can be true, as the same function of the value of OpB field as the corresponding read selection control signal for the OpA field, for example: RBH0 is for the same values (0,1,8,9,16,17,24,25) as RAH0 |
| RBH4 to RBH11 | Each is a Read selection control signal for Port B: decoded from 4 bits, including bits [4,3,0] out of bits of OpB field, and the swap bit (SW), one at a time of these can be true, as the same function of the value of OpB field and the SW bit as the corresponding read selection control signal for the OpB field, for example, RBH4 is for the same values (0,2,4,6 if SW low) and (16,18,20,22 if SW high) as RAH4 |
| WXH0 to WXH7 | Each is a Write selection control signal applicable to the X array index: decoded from 5 bits, including 4 bits of a 5-bit LACE latch (bits [4:1]), and the swap bit (SW); one at a time of these can be true |

## TABLE 2 – continued

| Designation | Comment |
|---|---|
| WXH8 to WXH15 | Each is a Write selection control signal applicable to the X array index: decoded from 5 bits, including 4 bits of a 5-bit LACO latch (bits [4:1]), and the swap bit (SW); one at a time of these can be true |
| WYH0 to WYH3 | Each is a Write selection control signal applicable to the Y array index: decoded from 4 bits, including bits [3,0] of the LACE latch, and bits [3,0] of the LACO latch; one at a time of these can be true |
| RPH0 to RPH3 | Each is a Read Parallel selection control signal for a respective sub-set of 8 registers |
| WPH0 to WPH2 | Each is a Write Parallel selection control signal for a respective sub-set of 8 registers |

Reference is now made to FIGS. 3B and 3C to describe a representatively selected register in relation to the manner in which each of the registers is represented in FIGS. 4D and 4E to facilitate the explanation of the construction and operation of the registers of Register File 111.

The register shown in FIGS. 3B and 3C is register R18. Like every register in Register File 111, it has a node 305′ defined by the common connection of node 305 (FIG. 3A) of every register cell 301 in the register. It also, like every such register, has a 32-bit wide output 307″ defined by virtue of each register cell 301 having a node 307. Also, like every register, its output 307″ is connected by a trunk path to an associated gating circuit arrangement used for multiplexing signals carried by that trunk path to the Port A Bus (PAB).

In the case of register R18, the trunk path to which its output 307″ is connected is TPAE1, and the associated gating circuit arrangement is connected to receive the RAH8 signal as a muliplexing selection control signal. Its node 307′ is connected to receive the RAH1 signal as a register read selection control signal relating to Port A. When the RAH1 signal is true and the RAH8 signal is true, the longword stored in register R18 is read out to be propagated by the Port A Bus.

To facilitate viewing the register from a broader perspective, FIG. 3C shows register R18 in a block diagram that employs a more compact notation. The number "8" appearing in the associated gating circuit for Port A indicates that it receives the RAH8 signal as described above. Hereinafter, a number appearing in such a gating circuit arrangement is referred to as a trunk path selection value. In register R18 as depicted in FIG. 3C the number "1" appears immediately to the left of its output 307″ to indicate that it is the RAH1 signal that is this register's read selection control signal for Port A. Hereinafter, such a number is referred to as a Port A selection value.

This same compact notation applies to the other three ports. As to Port B, node 315′ depicted in FIG. 3B is defined by the common connection of node 315 (FIG. 3A) of every register cell 301 in the register. Output 317″ depicted in FIG. 3B is defined by virtue of each register cell 301 having a node 317. Output 317″ is connected by a trunk path to an associated gating circuit arrangement used for multiplexing signals carried by the trunk path to the Port B Bus (PBB). As indicated in the more compact notation of FIG. 3C, when the RBH1 signal is true and the RBH8 signal is true, the longword stored in register R18 is read out to be propagated by the Port B Bus. Restating the foregoing more briefly, the Port B selection value for register R18 is 1, and the associated trunk path selection value for Port B is 8.

As to Port C, node 321′ depicted in FIG. 3B is defined by the common connection of node 321 (FIG. 3A) of every register cell 301 in the register, and node 323′ is defined by the common connection of node 323 (FIG. 3A) of every register cell 301 in the register. Input 325″ depicted in FIG. 3B is defined by virtue of each register cell 301 having a node 325. Input 325″ is connected to the Port C Bus (PCB). As indicated in the more compact notation of FIG. 3C, when the WXH5 signal is true and the WYH0 signal is true, there is written into register R18 a longword that is being propagated by the Port C Bus. Restating the foregoing more briefly, the Port C selection value for register R18 is 5,0.

As to the Unified Cache Bus, node 331' depicted in FIG. 3B is defined by the common connection of node 331 (FIG. 3A) of every register cell 301 in the register, and node 333' is defined by the common connection of node 333 (FIG. 3A) of every register cell 301 in the register. Bi-directional interface 335'' depicted in FIG. 3B is defined by virtue of each register cell 301 having a node 335. Interface 325'' is connected to 32 of the 512 conductors of the UCC Bus. As stated above, these 512 conductors are logically grouped into 16 groups with 32 conductors per group. The groups are designated as UC<0> through UC<15>. As indicated in the more compact notation of FIG. 3C, when the WPH2 signal is true, there is written into register R18 a longword that is being propagated by the UCC Bus. The 32-bits so written are designated as UCH<2>. Also as indicated in the more compact notation of FIG. 3C, when the RPH2 signal is true, the longword stored in register R18 is read out to be propagated by the UCC<2> portion of the UCC Bus. The UC bus selection value for register R18 is 2; this is the case for both read and for write.

With reference to FIG. 4, there will now be described the implementation of decoding circuit arrangement 109, and its relationship to Register File 111. FIG. 4 com prises FIGS. 4A to 4E. With reference first to FIG. 4A, a decoder 401 decodes a 2-bit wide signal (ICTH[2:1]) that is coupled to it from LIR 101. As mentioned above, each instruction has a control word portion with an OpB field. The OpB field has 6 bits of which the lower order 5 bits are ICTH[4:0]/

In depicting decoder 401 in FIG. 4A, its truth table is set out in columns headed "2" and 1." One output of decoder 401 is RBH0, and it is shown to the right of the row containing "0" and "0." This means that when the ICTH[2] signal is false and the ICTH[1] signal is false, decoder 401 asserts the RBH0 signal. The other entries in the truth table set out the conditions for which decoder 401 asserts the RBH1, RBH2, and RBH3 signals.

A decoder 403 decodes a 2-bit wide signal (ICTH[8:7]) that is coupled to it from LIR 101. As mentioned above, each instruction has a control word portion with an OpA field. The OpB field has 6 bits of which the lower order 5 bits are ICTH[10:6]. Decoder 403 has the same truth table as decoder 401, with ICTH[8:7] replacing ICTH[2:1]; the corresponding output signals of decoder 403 are RAH0, RAH1, RAH2, and RAH3.

A flip-flop 405 toggles back and forth between a first state and a second state, and asserts a SWap (SW) signal in the first state. A Toggle Window (TWH) signal is applied to flip-flop 405 by timing and control circuit arrangement 103 each time either a call or a return instruction is executed.

A decoder 407 decodes a 4-bit wide signal that is made up of two parts. One part, (ICTH[4,3,1]), is coupled to it from LIR 101. This 3-bit part is extracted from the OpB field. The other bit of the 4-bit wide signal is the SW signal produced by flip-flop 405.

In depicting decoder 407 in FIG. 2A, its truth table is set out in columns headed "SW," "4," "3," and "1." One output of decoder 407 is RBH4, and it is shown to the right of a bracket embracing the first two rows of the truth table. This bracket indicates an OR function; i.e., RBH4 is true for either the first or the second row of the truth table. The other entries in the truth table set out the conditions for which decoder 407 asserts the RBH4 through RBH11 signals. A dash appears in certain rows for the SW column to indicate "don't care" conditions.

A decoder 409 corresponds to decoder 407 in the same way that decoder 403 corresponds to decoder 401. Decoder 405 produces the RAH4 through RAH11 signals.

Reference is now made to FIG. 4B. A 5-bit latch LCA 411 is coupled to cache address bus 115, and is controlled by a Latch Enable Cache Address (LECAH) signal supplied to it by timing and control arrangement 103, so as to copy a cache line address during execution of each of predetermined instructions such as a store instruction. A multiplexer 413 selectively gates either the output of LCA 411 or ICTH[4:1] to LACE 415, depending upon the INRFH signal produced by comparator 105. "LACE" is an acronym for LAtch Cache Address Even. A decoder 417 decodes a 5-bit wide signal that is made up of two parts. One 4-bit part, i.e., LACE[4:1] is coupled to it from LACE 415. The other bit of the 5-bit wide signal is the SW signal produced by flip-flop 405. The truth table shown in decoder 417 sets forth the conditions under which decoder 417 asserts its various output signals, viz, WXH0 through WXH7.

A multiplexer 419 provides a 5-bit wide signal to LACO 421. "LACO" is an acronym for LAtch Cache Address Odd. Multiplexer 419 has three inputs, each being 5-bits wide. These are ICTH[4:0] regarding OpB, ICTH[10:6] regarding OpA, and LCA[4:0] from LCA 411.

A decoder 423 decodes a 5-bit wide signal that is made up of two parts. One 4-bit part, i.e., LACO[4:1] is coupled to it from LACO 421. The other bit of the 5-bit wide signal is the SW signal produced by flip-flop 405. Decoder 423 has the truth table as the one shown in decoder 417, with respect to the conditions under which decoder 423 asserts its corresponding output signals, viz, WXH8 through WXH15.

Reference is now made to FIG. 4C. A decoder 431 decodes a 4-bit wide input signal in accord with the indicated truth table to produce the WYH0 to WYH3 signals. A 2-bit latch (LPCA 433) latches the signal on cache address bus conductors CA[6:5] under control of the LECAH signal. A decoder 435 decodes a 6-bit wide signal in accord with the indicated truth table to produce the RPH0 through RPH3 signals. The 6-bit wide signal is made up of 5 parts. One 2-bit part is the output of LPCA 433. Each of the other 4 parts is a 1-bit signal. These are CRDH(Conditional ReaD), RDPH (ReaD Parallel), INRFH, and SW. The CRDH and RDPH signals are provided by timing and control circuit arrangement 103.

A decoder 437 decodes 2-bit wide in accord with the indicated truth table to produce the WPH0 through WPH2 signals. The 2-bit wide signal comprises the SW signal and a WRPH (WRite Parallel) signal provided by timing and control arrangemtn 103.

With reference to FIGS. 4D and 4E, the registers of Register File 111 and their associated gating circuit arrangements for Ports A and B are represented in the format described above with reference to FIG. 3C.

FIG. 4D shows half of these registers (those with even numbers, i.e., R0, R2, etc.), and FIG. 4E shows the other half.

Every register shown in FIG. 4D has its input 325" connected to the 32-bit wide PCE portion of the PCB bus. Likewise, every register shown in FIG. 4E has its input 325" connected to the 32-bit wide PCO portion of the PCB bus. The respective Port C selection value for every register is set out in FIGS, 4D and 4E.

As indicated in FIG 4D, registers R0, R2, R4, and R6 share trunk path TPBE0 which is connected to a gating circuit 451 for transferring a longword to PBB. These four register also share trunk path TPAE0 which is connected to a gating circuit 453 for transferring a longword to PAB. Registers R16, R18, R20, and R22 share trunk path TPBE1 which is connected to a gating circuit 455 for transferring a longword to PBB. These four register also share trunk path TPAE1 which is connected to a gating circuit 457 for transferring a longword to PAB. Registers R8, R10, R12, and R14 share trunk path TPBE2 which is connected to a gating circuit 461 for transferring a longword to PBB. These four register also share trunk path TPAE2 which is connected to a gating circuit 463 for transferring a longword to PAB. Registers R24, R26, R28, and R30 share trunk path TPBE2 which is connected to a gating circuit 465 for transferring a longword to PBB. These four register also share trunk path TPAE2 which is connected to a gating circuit 467 for transferring a longword to PAB.

As indicted in FIG 4E, registers R1, R3, R5, and R7 share trunk path TPBO0 which is connected to a gating circuit 471 for transferring a longword to PBB. These four register also share trunk path TPAO0 which is connected to a gating circuit 473 for transferring a longword to PAB. Registers R17, R19, R21, and R23 share trunk path TPBO1 which is connected to a gating circuit 475 for transferring a longword to PBB. These four register also share trunk path TPAO1 which is connected to a gating circuit 477 for transferring a longword to PAB. Registers R9, R11, R13, and R15 share trunk path TPBO2 which is connected to a gating circuit 481 for transferring a longword to PBB. These four register also share trunk path TPAO2 which is connected to a gating circuit 483 for transferring a longword to PAB. Registers R25, R27, R29, and R31 share trunk path TPBO2 is connected to a gating circuit 485 for transferring a longword to PBB. These four register also share trunk path TPAO2 which is connected to a gating circuit 487 for transferring a longword to PAB. Registers R16, R18, R20, and R22 share trunk path TPBE1 which is connected to a gating circuit 455 for transferring a longword to PBB. These four register also share trunk path TPAE1 which is connected to a gating circuit 457 for transferring a longword to PAB.

The structure so far described with reference to FIGS. 4D and 4E supports the sub-set swapping by register pairs, as illustrated by the following two contrasting examples. In each of these contrasting examples, the 6-bit OpB field of an instruction contains the value 3, which expressed in binary is 000011. In the first example, flip-flop 405 is in its reset state, whereby the SW signal is low (false). Under these circumstances, decoder 401 asserts the RBH1 signal. This causes each of 8 registers (R2, R3, R10, R11, R18, R19, R26, R27) to apply the longword it stores to its respective trunk path for Port B. Also under these circumstances, decoder 407 asserts the RBH6 signal. This activates only one of the gating circuits; in particular, this signal causes gating circuit 471 to transfer the longword from register R3 to PBB. In the contrasting second example, flip-flop 405 is in its set state, whereby the SW signal is high (true). As in the first example, decoder 401 asserts the RBH1 signal. However, in this example, decoder 407 asserts the RBH10 signal. This activates only one of the gating circuits; in particular, this signal causes gating circuit 475 to transfer the longword from register R19 to PBB. In other words, in the first example, register R3 is register R(3), whereas in the second example with the operative change being the state of slip-flop 405, register R19 is register R(3).

As to the structure for the parallel-transfer operation, the groups of the UC bus are connected to the registers as follows. As indicated in FIG. 4D, group UC<0> is connected to both R0 and R16. The UC port selection values for these registers are 0 and 2, respectively, so only one of these two at a time participates in a given parallel-transfer operation. Similarly, UC<2> is connected to both R2 and R18; UC<4> to both R4 and R20; and UC<6> to both R6 and R22, and for each of these pairs the registers of the pair have different UC port selection values.

As further indicated in FIG. 4D, groups UC<8, 10, 12, 14> are connected to R8, R10, R12, and R14, respectively, and also to R24, R26, R28, and R30, respectively.

As indicated in FIG. 4E, groups UC<1, 3, 5, 7> are connected to R1, R3, R5, and R7, respectively, and also to R17, R19, R21, and R23, respectively. As further indicated in FIG. 4E, groups UC<9, 11, 13, 15> are connected to R9, R11, R13, and R15, respectively, and also to R25, R27, R29, and R31, respectively. Some of these connections are redundant, and not used in normal operation. In this regard, register R15 does not participate in the parallel-transfer operation. Instead, PC 105 fills its slot so that the return address can be saved on a call and be restored on a return.

As stated at the outset of this detailed description, it is directed to the presently preferred embodiment of the invention and sets out many specific features of that embodiment and the instruction processor in which it is preferably incorporated. The following claims are directed to defining the invention and embrace implementations and practices in addition to those set forth in detail above.

The features disclosed in the foregoing description, in the following claims and/or in the accompanying drawings may, both separately and in any combination thereof, be material for realising the invention in diverse forms thereof.

**Claims**

1. In an instruction processing apparatus, a mechanism for supporting communication of arguments between routines, the mechanism being characterised by: a register file (111) comprising a set of addressable registers (R0 to R31) of which a first sub-set (R0 to R7) of the registers and a second sub-set (R16 to R23) of the registers define a plurality of register pairs, each register pair including a respective one of the registers in the first sub-set and a respective one of the registers in the second sub-set; sub-set allocating means (109) having a first state for allocating the first sub-set as a group for incoming arguments and the second sub-set as a group for outgoing arguments, and having a second state for allocating the second sub-set as a group for incoming arguments and the first sub-set as a group for outgoing arguments; register-access control means (109) for enabling each of successively invoked routines to access all the registers that define the register pairs, the register-access control means including register-selecting means for supporting a predetermined type of instruction, such predetermined type of instruction containing a state-independent reference for use in forming an address to select a register, the register-selecting means including address-altering means controlled by the sub-set allocating means for swapping the address of the two registers of each register pair to enable communication of arguments between calling and called routines without inter-register transfers of arguments.

2. A mechanism according to claim 1, wherein the sub-set allocating means includes means for changing its state in response to a predetermined type of instruction that controls instruction sequencing.

3. A mechanism according to claim 2, wherein the predetermined type of instruction that controls instruction sequencing includes a predetermined instruction for calling a routine and a predetermined instruction for returning from a called routine.

4. A mechanism according to any one of claims 1 to 3, and further comprising means (123) for cooperating with a buffer memory (117) in the instruction processing apparatus so that the contents of a plurality of the registers (R0 to R31) are stored in parallel into the buffer memory in response to a predetermined type of instruction that controls instruction sequencing.

5. A mechanism according to claim 4, wherein the contents so stored in parallel into the buffer memory (117) include arguments that were passed to a routine that calls another routine.

6. A mechanism according to claim 5, wherein the contents so stored in parallel into the buffer memory (117) further include local variables of the calling routine.

7. A mechanism according to claim 4, wherein the contents so stored in parallel into the buffer memory (117) further include an instruction address to which to return after execution of the called routine.

8. A mechanism according to claim 7, wherein the contents so stored in parallel into the buffer memory further include local variables of the calling routine.

9. In an instruction processing apparatus, a mechanism for supporting routines having instructions for accessing arguments and local variables, the mechanism being characterised by: a program-visible register file (111) for storing data including a plurality of arguments and a plurality of local variable being stored in a separately-addressable register (R0 to R31) of the register file to support independent access during instruction processing within a routine; a buffer memory (17) organised to define a plurality of equal-width buffer lines, the width of which equals the sum of the widths of a plurality of the registers of the register file; and circuit means (123) coupled between the register file and the buffer memory, which includes means responsive to an instruction to call a routine for saving a buffer line in a parallel-transfer operation in which arguments that were passed to a calling routine together with local variables used in the calling routine are concatenated and saved in parallel.

10. A mechanism according to claim 9, wherein the circuit means (123) includes means responsive to an instruction to return to a calling routine for performing a parallel-transfer opeation in which concatenated data saved in a buffer line is distributed to a plurality of the registers in the register file.

11. A mechanism according to claim 9 or 10, wherein the circuit means (123) coupled between the register file and the buffer memory further includes means for inserting, as part of the concatenated data saved in parallel, an instruction address to which to return after execution of the called routine.

12. A mechanism according to any one of claims 4 to 11, wherein the register file (111) and the buffer memory (117) are embodied in a single integrated circuit chip.

13. A mechanism according to any one of claims 4 to 12, wherein the buffer memory (117) is a cache memory.

14. A mechanism according to any preceding claim, and further comprising memory-mapping means including a window-pointer register (107) for storing in address for use in identifying a location in an external memory servicing the instruction processing apparatus.

15. A mechanism according to claim 14, wherein the memory-mapping means further includes means for changing the address stored in the window-pointer register (107) by a predetermined value each time a routine is called.

16. A mechanism according to claim 15, wherein the memory-mapping means further includes means for changing the address stored in the window-pointer register (107) by a predetermined value each time a routine returns to a calling routine.

17. A mechanism according to any one of claims 13 to 16, wherein the memory-mapping means further includes a return-window-pointer register (108) for storing an address for use in identifying a location in an external memory servicing the instruction processing apparatus.

18. A method of operating an instruction processing apparatus to support passing of an argument from a calling routine to a called routine, the method being characterised by: establishing a first of first and second states such that the first state is defined during execution of instructions of the calling routine that contain operand references to a register file (111); saving an argument in a register of the register file selected on the basis of a logical function of the presently defined state and an instruction operand having a predetermined value in accord with a convention applicable to referencing an outgoing argument; Establishing the second of the first and second states such that the second state is defined during execution of instructions of the called routine that contain operand references to the same register file; retrieving the argument from the register file by selecting the register containing it on the basis of a logical function of the presently defined state and an instruction operand having another predetermined value in accord with a convention applicable to referencing an incoming argument.

19. A method of operating an instruction processing apparatus to support routines having instructions for accessing arguments and local variables, the method being characterised by: saving a plurality of arguments and a plurality of local variables in a program-visible register file (111), each such argument and each such local variable being stored in a separately-addressable register of the register file to support independent access during instruction processing within a routine; and executing a call instruction in a calling routine to call a called routine, and in the course of doing so carrying out a parallel transfer operation in which arguments that were passed to the calling routine together with local variables used in the calling routine are concatenated and saved in parallel in a buffer memory organized to define a plurality of equal-width buffer lines, the width of which equals the sum of the widths of a plurality of the registers of the register file.

FIG. 1

# FIG. 2a

| | | |
|---|---|---|
| R31 | | R(31) |
| | | |
| R24 | | R(24) |
| R23 | | R(23) |
| | | |
| RI7 | b | R(17) |
| RI6 | a | R(16) |
| RI5 | Ø | R(15) |
| | | |
| R8 | c | R(8) |
| R7 | | |
| | | |
| RØ | | R(Ø) |

HIGH MEMORY

i+68  FOR b
i+64  FOR a

i+32  FOR c

WP → 1

RWP →

LOW MEMORY

# FIG. 2b

| | | |
|---|---|---|
| R31 | | R(31) |
| | | |
| R24 | | R(24) |
| R23 | | R(7) |
| | | |
| RI7 | b | R(1) |
| RI6 | a | R(Ø) |
| RI5 | Ø | R(15) |
| | | |
| R8 | z | R(8) |
| R7 | | R(23) |
| | | |
| RØ | | R(17) |
| | | R(16) |

HIGH MEMORY

i+96  FOR z

i+68  FOR b
WP → i+64  FOR a

i+32  FOR c

RWP →

LOW MEMORY

EP 0 310 445 A2

FIG. 2c

SELECTED CACHE LINE
512 BITS SAVED

HIGH MEMORY

R(31)

RETURN

R(31)

HIGH MEMORY

WP →

R(0)

CALL

R(0)

WP →

RWP →

RWP →

LOW MEMORY

LOW MEMORY

EP 0 310 445 A2

FIG. 3a

FIG. 3b

FIG. 3c

FIG. 4a

FIG. 4b

FIG. 4c

EP 0 310 445 A2

| | EØ | OØ | E3 | O3 | |
|---|---|---|---|---|---|
| WEAD<0> | 0 | X | 0 | X | ▷ WYHØ |
| WOAD<0> | 0 | X | I | X | ▷ WYH1 |
| WEAD<3> | X | I | X | 0 | ▷ WYH2 |
| WOAD<3> | X | I | X | I | ▷ WYH3 |

CAH<5:6> — [LPCA] — LCAH<5:6>

LECAH
CRDH
RDPH
INRFH
SW

| | CRDH | INRFH | RDRFH | SW | 6 | 5 | |
|---|---|---|---|---|---|---|---|
| | 0 | X | I | 0 | X | X | RPHØ |
| | | | | | | | RPH1 |
| | | | | | | | RPH2 |
| | | | | | | | RPH3 |

WRPH — WRITE PARALLEL

| | SW | WRPH | |
|---|---|---|---|
| | 0 | I | ▷ WPHØ |
| | X | I | ▷ WPH1 |
| | I | I | ▷ WPH2 |

FIG. 4d

EP 0 310 445 A2

FIG. 4e